(19) **Europäisches Patentamt / European Patent Office / Office européen des brevets**

(11) **EP 1 968 214 A1**

(12) **EUROPEAN PATENT APPLICATION**
published in accordance with Art. 158(3) EPC

(43) Date of publication:
**10.09.2008 Bulletin 2008/37**

(21) Application number: **07706855.9**

(22) Date of filing: **16.01.2007**

(51) Int Cl.:
**H04B 7/26** (2006.01)

(86) International application number:
**PCT/JP2007/050528**

(87) International publication number:
**WO 2007/083636 (26.07.2007 Gazette 2007/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.01.2006 JP 2006008996**

(71) Applicant: **Matsushita Electric Industrial Co., Ltd. Kadoma-shi Osaka 571-8501 (JP)**

(72) Inventors:
• **NISHIO, Akihiko**
  **Matsushita Electric Industrial Co., Ltd.**
  **2-1-61, Shiromi, Chuo-ku**
  **Osaka 540-6207 (JP)**

• **YOSHII, Isamu**
  **Matsushita Electric Industrial Co., Ltd.**
  **2-1-61, Shiromi, Chuo-ku**
  **Osaka 540-6207 (JP)**
• **SUZUKI, Hidetoshi**
  **Matsushita Electric Industrial Co., Ltd.**
  **2-1-61, Shiromi, Chuo-ku**
  **Osaka 540-6207 (JP)**
• **MIYOSHI, Kenichi**
  **Matsushita Electric Industrial Co., Ltd.**
  **2-1-61, Shiromi, Chuo-ku**
  **Osaka 540-6207 (JP)**

(74) Representative: **Grünecker, Kinkeldey, Stockmair & Schwanhäusser Anwaltssozietät Leopoldstrasse 4 80802 München (DE)**

(54) **RADIO TRANSMISSION DEVICE AND RADIO TRANSMISSION METHOD**

(57) Provided is a radio transmission device capable of improving reception accuracy of a unicast channel received after a multicast channel. In the radio transmission device, a multicast transmission power control unit (106) performs control to reduce the transmission power of the OFDM symbol at the end of a sub frame for a multicast signal outputted from a CP insertion unit (105-2). A radio transmission unit (108) transmits a unicast signal multiplexed by a sub frame multiplexing unit (107) and a multicast signal of controlled transmission power via a transmission antenna (109).

FIG.2

**Description**

Technical Field

The present invention relates to a radio transmitting apparatus and a radio transmitting method used in a communication system where multicast communication and unicast communication are carried out.

Background Art

Recently, in mobile communication, various information such as images and data other than speech are transmission targets. Accompanying this, demands for more reliable and higher speed transmission are increasing. However, when high speed transmission is carried out in mobile communication, the influence of delay waves due to multipath cannot be ignored, and so transmission performances degrade due to frequency selective fading.

As one of counter techniques for frequency selective fading, multicarrier communication represented by the OFDM scheme is focused upon. "Multicarrier communication" refers to a technique of carrying out high speed transmission by transmitting data using a plurality of subcarriers where transmission speed is suppressed to such an extent that frequency selective fading does not occur. The OFDM scheme in particular provides the maximum frequency efficiency in multicarrier communication because the frequencies of a plurality of subcarriers where data is arranged are orthogonal to each other, and can be realized with a comparatively simple hardware configuration. For this reason, the OFDM scheme is focused upon as a communication method that is employed in cellular scheme mobile communication and various studies upon this scheme are underway.

Now, studies related to multicast services are underway. Communication carried in multicast services is not one-to-one communication but is one-to-many communication. That is, with multicast, one base station transmits data (for example, music data and video image data) to a plurality of mobile stations. Further, the service assumes a comparatively wider area, and so the same data is transmitted from a plurality of base stations. Multicast data used in such one-to-many communication is transmitted through a multicast channel.

As described above, the same data is transmitted at the same time from a plurality of base stations through the multicast channel, and so mobile stations near cell edges receive signals in which signals transmitted from a plurality of base stations are mixed. In OFDM, if the same signal transmitted from a plurality of base stations is received at a mobile station with a delay lag that comes within the range of the signal length of the CP (Cyclic Prefix), a plurality of signals are combined and received as a signal with amplified transmission power. Non-Patent Document 1 discloses using a longer CP in the multicast channel than in the unicast channel so that signals from a plurality of cells come within in the range of the CP, in an environment where there are transmission timing errors between base stations and transmission delays from distant cells. In this case, in the multicast channel, signals transmitted from nearby cells do not cause interference.

Further, Non-Patent Document 2 discloses time-domain-multiplexing the multicast channel using a longer CP with the unicast channel using a shorter CP, that is, switching the multicast channel and the unicast channel in the units of time defined by subframes.

Non-Patent Document 1: "OFDM Radio Parameter Set in Evolved UTRA Downlink," 3GPP RAN WG1 Ad Hoc on LTE meeting(2005.06) R1-050587.
Non-Patent Document 2: "Channel Structure for E-UTRA MBMS Evaluation," 3GPP RAN WG1#42bis meeting (2005.10) R1-051103.

Disclosure of Invention

Problems to be Solved by the Invention

Transmission is carried out with high transmission power in the multicast channel for the following two reasons. The first reason is that the multicast channel needs to be received with quality of a predetermined level or more even in a mobile station distant apart from a base station in an area covered by the multicast service. Furthermore, this reception needs to be realized without a retransmission by ARQ. Further, the other reason is that, as described above, no interference from nearby cells occurs in the multicast channel, and so, if transmission is carried out with high transmission power, the error rate or throughput does not decrease due to increased interference.

On the other hand, the decrease in the received error rate or throughput due to inter-cell interference needs to be prevented in the unicast channel, and so transmission is carried out with low transmission power in the unicast channel compared to the multicast channel.

Consequently, if the multicast channel and the unicast channel are multiplexed in the units of subframe as in Non-Patent Document 2, the following problem occurs. FIG.1 shows the relationships between powers for the multicast channel and the unicast channel. The CP is shown with shades.

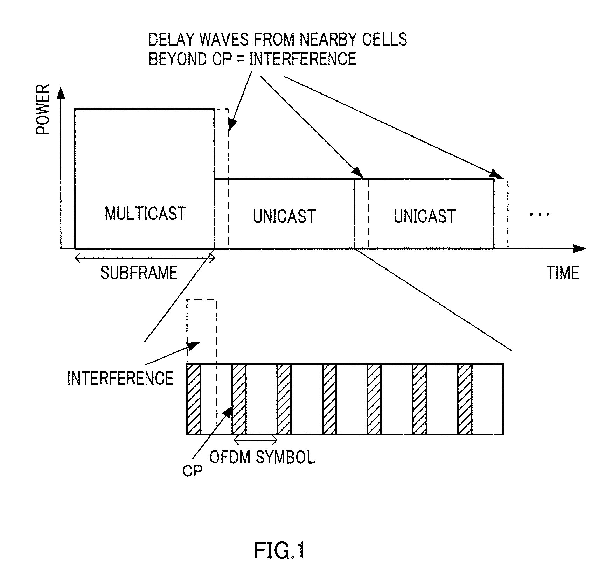

In FIG. 1, signals transmitted with high power in a multicast subframe from the base station of a nearby cell are received at a mobile station beyond the CP of the leading OFDM symbol in a unicast subframe (where a subframe is configured with a plurality of OFDM symbols including the CP's). Here, there are differences of transmission timings between the base stations, and so delay waves (multicast subframes) from the nearby cells are highly likely to be beyond the CP length and be received. In this case, the unicast subframe next to the multicast subframe receives substantial interference in the leading OFDM symbol, and so received quality degrades.

The above problem becomes more significant for the following reason. That is, in the unicast subframe, to shorten the delay time in data decoding processing, the pilot signal for channel estimation and a control signal showing the modulation scheme and coding rate of transmission data are transmitted in the leading OFDM symbol. Then, unless these signals are received accurately, data cannot be decoded accurately, and so the above interference causes significant degradation in throughput of the unicast channel.

It is therefore an object of the present invention to provide a radio transmitting apparatus and a radio transmitting method for increasing communication system throughput by improving the reception accuracy of the unicast channel received following the multicast channel.

Means for Solving the Problem

The radio transmitting method according to the present invention includes: with respect to a multicast signal and a unicast signal adjacent to the multicast signal, carrying out control to decrease transmission power in a rear portion in the multicast signal or carrying out control to increase transmission power in a leading portion in the unicast signal; and transmitting the multicast signal and the unicast signal.

Advantageous Effect of the Invention

The present invention is able to improve the reception accuracy of the unicast channel received following the multicast channel and increase communication system throughput.

Brief Description of Drawings

FIG.1 shows the relationship of powers for the multicast channel and the unicast channel;
FIG. 2 is a block diagram showing a main configuration of a radio transmitting apparatus according to Embodiment 1;
FIG.3 shows transmission data;
FIG.4 shows transmission power for a transmission signal from the radio transmitting apparatus according to Embodiment 1;
FIG.5 shows transmission power for a transmission signal from the radio transmitting apparatus according to Embodiment 1;
FIG.6 shows transmission power for a transmission signal from the radio transmitting apparatus according to Embodiment 1;
FIG.7 shows transmission power for a transmission signal from the radio transmitting apparatus according to Embodiment 1;
FIG.8 illustrates a variation of Embodiment 1;
FIG. 9 is a block diagram showing a main configuration of the radio transmitting apparatus according to the variation of Embodiment 1;
FIG.10 is a block diagram showing a main configuration of the radio transmitting apparatus according to Embodiment 2;
FIG. 11A shows a transmission signal in the frequency domain from the radio transmitting apparatus according to Embodiment 2;
FIG. 11B shows a transmission signal in the frequency domain from the radio transmitting apparatus according to Embodiment 2;
FIG.12 shows a transmission signal in the frequency domain from the radio transmitting apparatus according to Embodiment 2;
FIG.13 is a block diagram showing a main configuration of the radio transmitting apparatus according to Embodiment 3;
FIG.14 shows an example of a data table according to Embodiment 3;

FIG.15A shows a transmission signal in the frequency domain from the radio transmitting apparatus according to Embodiment 3;

FIG.15B shows a transmission signal in the frequency domain from the radio transmitting apparatus according to Embodiment 3;

FIG.16 shows an example of the data table according to Embodiment 3;

FIG.17 is a block diagram showing a main configuration of the radio transmitting apparatus according to Embodiment 4;

FIG. 18 shows a transmission signal in the time domain from the radio transmitting apparatus according to Embodiment 4;

FIG.19 is a block diagram showing a main configuration of the radio transmitting apparatus according to Embodiment 5; and

FIG.20 shows a transmission signal in the time domain from the radio transmitting apparatus according to Embodiment 5.

Best Mode for Carrying Out the Invention

Embodiments of the present invention will be described below with reference to accompanying drawings.

(Embodiment 1)

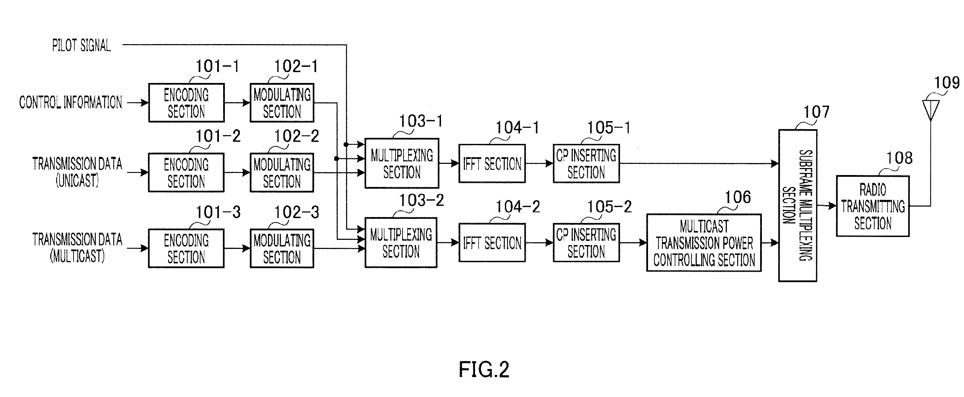

FIG. 2 is a block diagram showing a main configuration of a radio transmitting apparatus according to Embodiment 1 of the present invention. Further, a case will be described here as an example where the radio transmitting apparatus according to the present embodiment is mounted in a base station of a communication system. Further, in this description, a plurality of configurations with the same function will be assigned the same reference numerals and distinguished from one another by assigning branch numbers after the reference numerals.

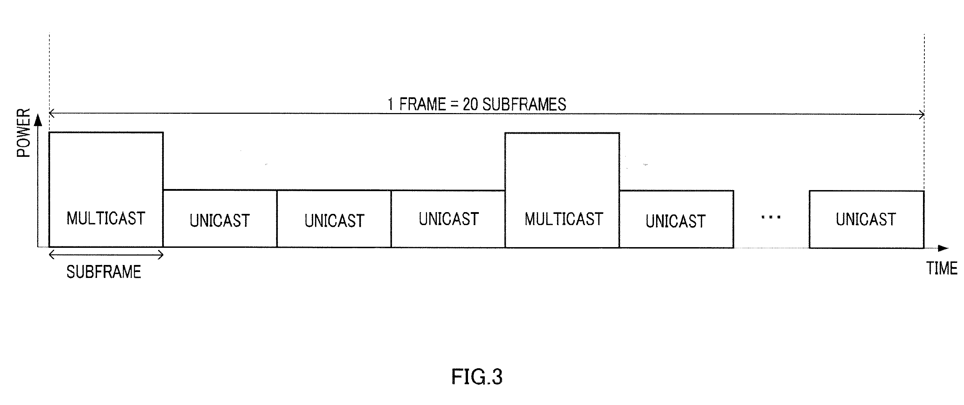

The radio transmitting apparatus mounted in the base station according to the present embodiment has encoding sections 101-1 to 101-3, modulating sections 102-1 to 102-3, multiplexing sections 103-1 and 103-2, IFFT sections 104-1 and 104-2, CP inserting sections 105-1 and 105-2, multicast transmission power controlling section 106, subframe multiplexing section 107, radio transmitting section 108 and transmitting antenna 109. Further, the radio transmitting apparatus time-domain-multiplexes unicast data and multicast data as transmission data and transmits the transmission data. That is, as shown in FIG.3, transmission data is multiplexed in the units of time divided into subframes. At this time, the multicast data is transmitted with high power compared to the unicast data. Further, the base station transmits the unicast transmission data, the multicast transmission data and control information showing the transmission parameters, to the mobile station.

Each section of the radio transmitting apparatus according to the present embodiment carries out the following operation.

Encoding sections 101-2 to 101-3 perform error correcting encoding such as turbo encoding on the (unicast and multicast) transmission data. Modulating sections 102-2 and 102-3 carry out modulation such as QPSK and 1 6QAM on the encoded data. In this case, the transmission processing is carried out in the units of subframe, and so the encoding and modulation processing are carried out on unicast data if the present subframe is a unicast data subframe, and the encoding and modulation processing are carried out on multicast data if the present subframe is a multicast data subframe. Similarly, encoding section 101-1 and modulating section 102-1 carry out encoding and modulation processing on control information for unicast data and multicast data.

Multiplexing sections 103-1 and 103-2 multiplex the modulated unicast data signal or modulated multicast data signal, the control information and the pilot signal and form a multiplex subframe. The multiplexing method may employ time-domain-multiplexing (i.e. OFDM symbol multiplexing) or frequency-domain-multiplexing (i.e. subcarrier multiplexing) in a subframe or may employ the combination of these. IFFT sections 104-1 and 104-2 carry out IFFT processing on multiplex signals, convert the signals into the time domain and generate OFDM symbols. CP inserting sections 105-1 and 105-2 insert rear portions of the OFDM symbols generated by the IFFT as CP's to the leading portions.

Multicast transmission power controlling section 106 carries out control with respect to a multicast signal in which the CP's are inserted, to decrease transmission power in an OFDM symbol in the last portion (i.e. rear portion) in a subframe. This method of decreasing transmission power will be described later.

Subframe multiplexing section 107 multiplexes a unicast signal and a multicast signal in subframes. That is, when the unicast signal and the multicast signal are inputted, the unicast signal is outputted in the unicast subframe and the multicast signal is outputted in the multicast subframe. Radio transmitting section 108 generates a radio signal by carrying out radio transmission processing such as D/A conversion and up-conversion, and transmits the signal through transmitting antenna 109.

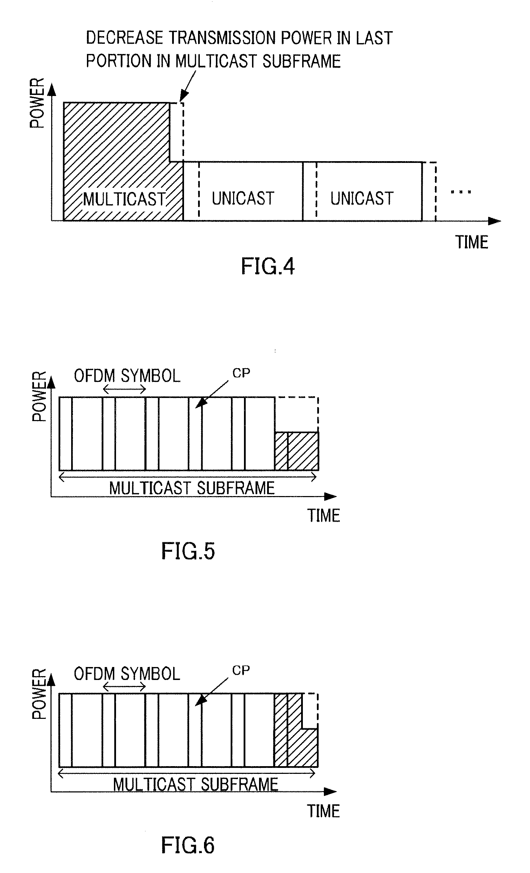

In this way, multicast transmission power controlling section 106 carries out control to decrease transmission power in the OFDM symbol in the rear portion in the multicast subframe, so that a signal with transmission power as shown in FIG.4 is transmitted.

Next, the operation of multicast transmission power controlling section 106 will be described in detail.

Multicast transmission power controlling section 106 carries out control to decrease transmission power in the last OFDM symbol in the multicast subframe. Here, there are the following three methods A to C as methods of decreasing transmission power.

<Method A>

As shown in FIG.5, multicast transmission power controlling section 106 carries out control to uniformly decrease transmission power in the entire last OFDM symbol (shadedportion) in the multicast subframe. By this means, it is possible to decrease transmission power without causing interference between subcarriers in the multicast channel.

Further, by decreasing transmission power in the last OFDM symbol to the same level as transmission power in the unicast subframe, it is possible to solve the following problem.

That is, inAMC (Adaptive Modulation and Coding), the base station determines the MCS (the modulation scheme and coding rate) for data transmission based on received qualitymeasured at the mobile station. Here, if the data of the subframe immediately preceding the subframe in which the mobile station measures received quality and the (multicast or unicast) data transmitted in the subframe immediately preceding the subframe in which the base station transmits data are different, the amount of received interference is different and received quality upon measurement and received quality upon data transmission are different, and so transmission cannot be carried out using an adequate MCS.

By controlling the transmission power in the last OFDM symbol to the same level as the transmission power in the unicast subframe, the amount of interference, that is, received quality, is the same even if data transmitted in the subframe immediately preceding the subframe in which the mobile station measures received quality and the subframe in which the base station transmits data is multicast or unicast, so that it is possible to carry out transmission using an adequate MCS.

<Method B>

As shown in FIG.6, multicast transmission power controlling section 106 carries out control to further decrease transmission power only in part of the last OFDM symbol (shaded portion) in the multicast frame. To be more specific, transmission power is decreased only in the rear portion in the last OFDM symbol. Consequently, it is possible to minimize the amount of power decrease in the multicast channel and prevent quality degradation in the multicast channel.

Further, if the range of transmission power decrease is set to a range of the same length as the CP length in the multicast channel, it is possible to decrease transmission power only in the range where delay waves are likely to influence the unicast subframe.

Further, by decreasing transmission power to a level of transmission power for the unicast channel, it is possible to obtain the same effect as described in method A.

<Method C>

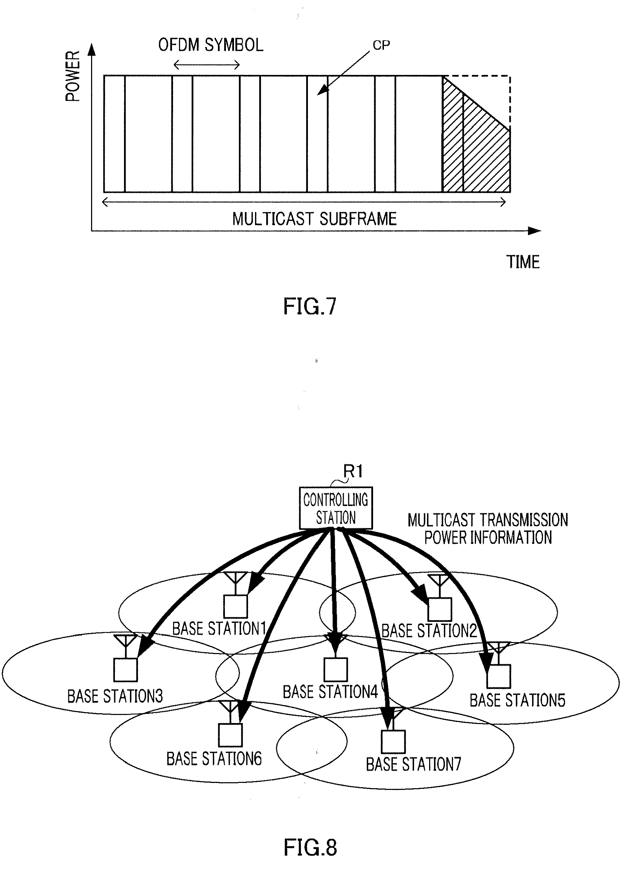

As shown in FIG.7, multicast transmission power controlling section 106 carries out control to gradually decrease transmission power in the entire last OFDM symbol (shaded portion) over the time domain. By this means, transmission power is decreased more in the rear portion upon which greater interference is likely to influence due to the presence of a unicast subframe, so that it is possible to reduce the total amount of power decrease in the multicast channel and reduce interference to unicast.

Further, in this way, it is possible to decrease interference between subcarriers in the multicast channel by gradually decreasing transmission power. Further, in FIG. 7, although a linear decrease from the CP start time point to the last time point of the OFDM symbol is shown, the Ramp function that smoothly decreases the start time point may be used.

In this way, according to the present embodiment, the base station carries out transmission by decreasing the transmission power in the last portion in the multicast subframe. Particularly, the transmission power is decreased by various methods in the time domain. Consequently, the interference upon the unicast channel immediately following the multicast subframe is reduced, so that it is possible to improve throughput of the unicast channel.

Further, with the present embodiment, unimportant data may be arranged in the last OFDM symbol in the subframe in which transmission power is decreased in the multicast channel. Here, "unimportant data" refers to parity bits in turbo code, enhanced layer data in layered modulation, control data and a pilot signal (which may be referred to as a "reference signal") . By this means, transmission power for unimportant data can be decreased in the multicast channel, so that it is possible to prevent degradation in received quality of multicast data.

Further, multicast transmission power controlling section 106 may set transmission power for the last OFDM symbol, and for the overall subframe at the same time.

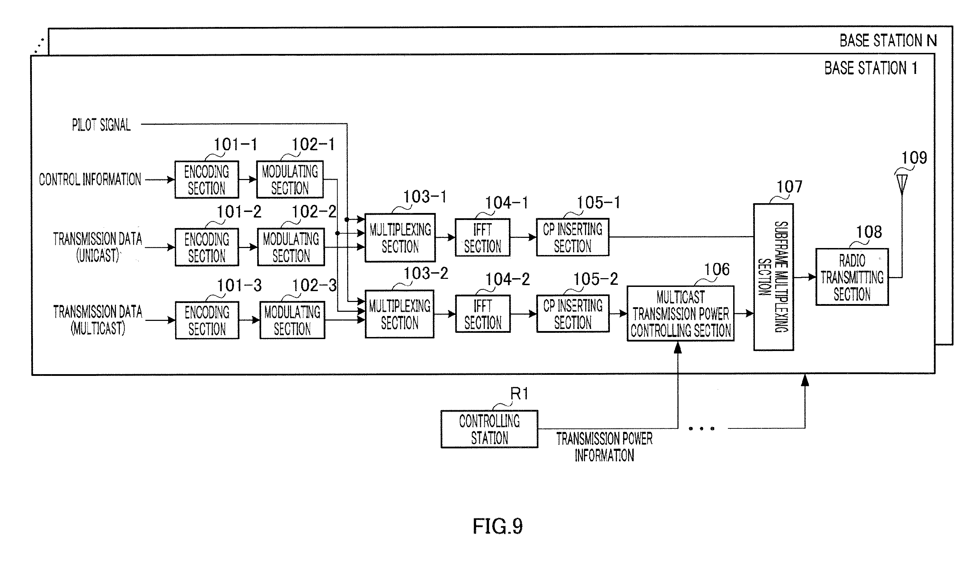

Further, in a radio transmitting system where multicast communication is carried out, quality of multicast data is generally controlled by the controlling station. That is, the controlling station guarantees quality corresponding to the content of multicast data in the cover area. Consequently, as shown in FIG.8, the present embodiment may employ a configuration where the controlling station R1 reports amount of transmission power decrease in the last OFDM symbol in the multicast subframe to base stations 1 to 7 as multicast transmission power information and each base station controls transmission power according to the multicast transmission power information. For example, for important content, degradation in received quality of more important content is prevented by setting the amount of transmission power decrease low. FIG. 9 is a block diagram showing a main configuration of base stations 1 to N (radio transmitting apparatus) according to the above variation of the present embodiment. Controlling station R1 reports multicast transmission power information to multicast transmission power controlling section 106 mounted in base stations 1 to N. According to this multicast transmission power information, the amount of transmission power decrease in the last OFDM symbol in the subframe is determined, and transmission power is controlled according to the amount of transmission power decrease. By this means, it is possible to set power corresponding to content in multicast and guarantee quality of multicast data at controlling section R1. Further, control may be carried out by specific base stations in a plurality of base stations, instead of controlling station R1. Further, transmission power may be used as is as transmission power information instead of the amount of transmission power decrease in the last OFDM symbol in the subframe.

(Embodiment 2)

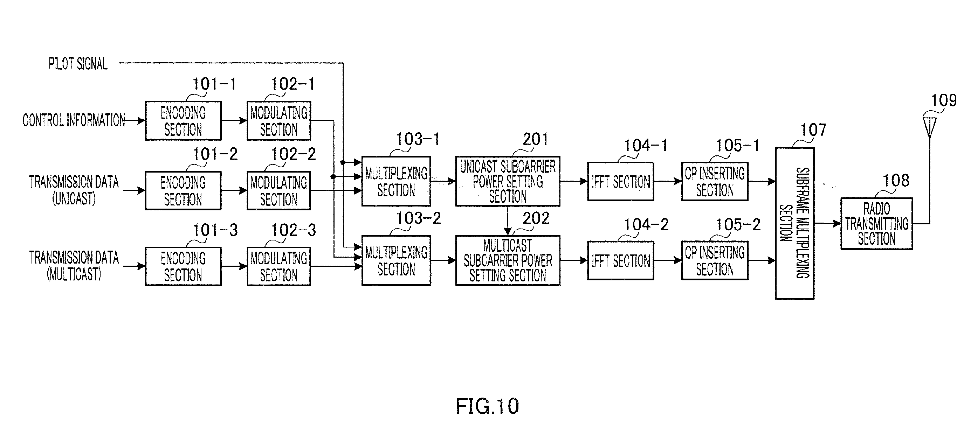

FIG.10 is a block diagram showing a main configuration of the radio transmitting apparatus according to Embodiment 2 of the present invention. This radio transmitting apparatus has the same basic configuration as the radio transmitting apparatus (see FIG.2) as described in Embodiment 1, and so the same components will be assigned the same reference numerals and repetition of description will be omitted.

The base station mounting the radio transmitting apparatus according to the present embodiment carries out control to decrease the transmission power in the last portion in the multicast subframe in the frequency domain, and transmits a signal in which transmission power is controlled. At this time, according to the transmission power in the immediately following unicast subframe, processing of decreasing transmission power in the last portion in the multicast subframe is carried out.

The radio transmitting apparatus according to Embodiment 2 differs from the radio transmitting apparatus according to Embodiment 1 in providing unicast subcarrier power setting section 201 and multicast subcarrier power setting section 202. Further, these configurations are provided between the multiplexing sections (103-1 and 103-2) and the IFFT sections (104-1 and 104-2).

Unicast subcarrier power setting section 201 controls transmission power in the unicast subframe per subcarrier or per subband configured with a plurality of subcarriers. Here, subcarriers transmitted with high transmission power in a given cell are adjusted to be transmitted with low transmission power in nearby cells such that cells do not interfere one another. That is, these subcarriers transmitted with high transmission power at this base station are transmitted with low transmission power in nearby cells.

Multicast subcarrier power setting section 202 controls the transmission power in the last OFDM symbol in the multicast subframe per subcarrier or per subband. Here, multicast subcarrier power setting section 202 receives as input transmission power information per subcarrier in the immediately following unicast subframe from unicast subcarrier power setting section 201, and sets lower power in subcarriers or subbands with higher transmission power.

The power setting in multicast subcarrier power setting section 202 is carried out, for example, as described below.

Multicast subcarrier power setting section 202 sets the power in each subcarrier in the last OFDM symbol in the multicast subframe in proportion to the reciprocal of the power in each subcarrier in unicast. That is, the transmission power $P_{mn}$ for subcarrier n in multicast is represented by following equation 1.

[1]

$$P_{mn} = P_{m,total} \times \frac{1/P_{un}}{\sum_{i=1}^{N} 1/P_{ui}} \quad \dots \quad (Equation\ 1)$$

Here, $P_{m,total}$ is the total transmission power in the last OFDM symbol in the multicast subframe and is the same as the transmission power in the unicast subframe. Further, $P_{u1}$, $P_{u2}$, $P_{u3}$, ... and $P_{uN}$ represent the transmission power for subcarriers 1, 2, 3, ... and N (N is the number of subcarriers) in the unicast channel.

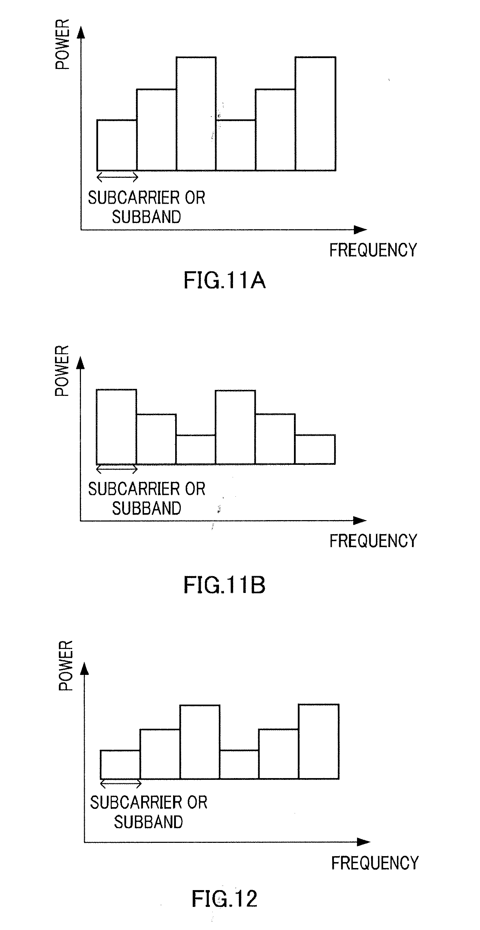

Transmission signals of the multicast subframe and the unicast subframe immediately following the multicast subframe of the present embodiment shown in the frequency domain are represented as in FIGs. 11A and 11B. FIG. 11A shows the last OFDM symbol in the multicast subframe, and FIG.11B shows the leading OFDM symbol in the adjacent unicast subframe next to (immediately following) the multicast subframe. Comparison of these drawings shows that, in FIG.11B, subcarriers (frequency bands) where transmission power is set high in the adj acent subframe are specified, and, in FIG.11A, the transmission power for these specified subcarriers is set lower. In this way, the interference is flexibly adjusted between nearby cells, that is, frequencies causing the interference are made different between nearby cells, and so different transmission power is set depending on subcarriers.

Here, the reasons that lower power is set for subcarriers or subbands of higher transmission power in the immediately following unicast subframe, will be described below.

In the unicast channel, subcarriers are transmitted with different transmission powers so as not to cause interference between cells. Here, transmission power for each subcarrier is made different on a per cell basis. That is, a subcarrier transmitted with high transmission power in a given cell is transmitted with low transmission power in nearby cells. By this means, when transmission is carried out with high transmission power in a given cell, interference from nearby cells is reduced, so that received quality improves and, consequently, it is possible to improve communication system throughput. Further, by making subcarriers transmitted with high power and subcarriers transmitted with low power different on a per cell basis, it is possible to improve throughput in all cells.

Subcarriers transmitted with high transmission power in a cell are expected to be transmitted with low power in nearby cells as shown in FIG.12. Further, provided that the multicast subframe in a given cell interferes with unicast subframes in nearby cells, the transmission power for subcarriers transmitted with high power in the unicast channel in the cell is decreased, so that it is possible to reduce interference upon the unicast channels transmitted with low power in the nearby cells. By this means, interference upon subcarriers of low transmission power which are more susceptible to interference is reduced, so that it is possible to improve communication system throughput.

In this way, according to the present embodiment, in the next unicast subframe following the multicast subframe, lower transmission power is set for subcarriers of lower transmission power in nearby cells, so that it is possible to reduce interference upon the unicast channels in nearby cells and improve system throughput.

Further, although a case has been described with the present embodiment as an example where transmission power is set per subcarrier or per subband in unicast subcarrier power setting section 201, a configuration may be possible where transmission power is set per OFDM symbol. In this case, multicast subcarrier power setting section 202 sets lower power for subcarriers of higher power in the leading OFDM symbol in the immediately following unicast subframe.

Further, multicast subcarrier power setting section 202 may set transmission power for the last OFDM symbol, and for the overall subframe at the same time.

Further, although a case has been described with the present embodiment as an example where multicast data alone is transmitted in the multicast subframe, if unicast data is frequency-domain-multiplexed in the multicast subframe, that is, if unicast data is transmitted in part of the subcarriers, it is possible to obtain the same effect. In this case, multicast subcarrier power setting section 202 controls the transmission power for the subcarriers transmitting multicast data.

(Embodiment 3)

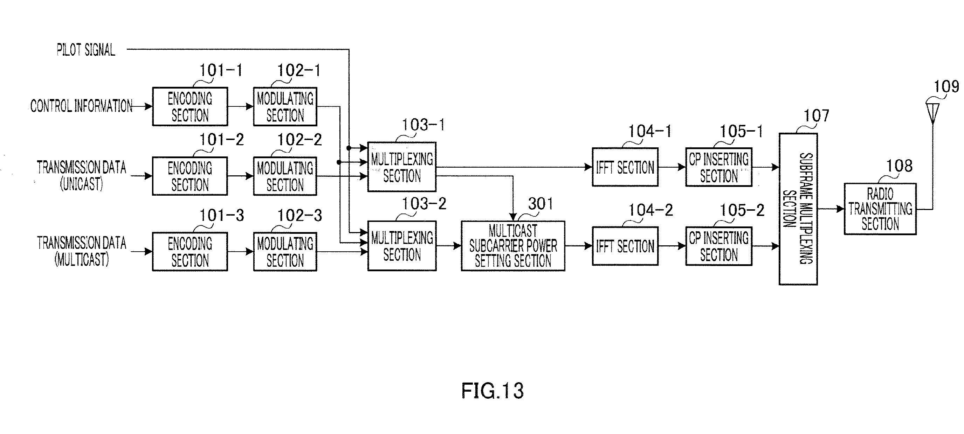

FIG.13 is a block diagram showing a main configuration of the radio transmitting apparatus according to Embodiment 3 of the present invention. Further, this radio transmitting apparatus has the same basic configuration as the radio transmitting apparatus shown in Embodiment 1, and the same components will be assigned the same reference numerals and repetition of description will be omitted.

The base station mounting the radio transmitting apparatus according to the present embodiment carries out transmission by decreasing the transmission power in the last portion in the multicast subframe. At this time, the base station carries out control to decrease transmission power in the frequency domain according to the data arrangement in the immediately following unicast subframe.

The radio transmitting apparatus according to the present embodiment differs from the radio transmitting apparatus according to Embodiment 1 in providing multicast subcarrier power setting section 301 between the multiplexing sections (103-1 and 103-2) and the IFFT sections (104-1 and 104-2).

Multicast subcarrier power setting section 301 controls transmission power in the last OFDM symbol in the multicast subframe per subcarrier or per subband. Here, multicast subcarrier power setting section 301 receives information showing arrangement of the leading OFDM symbol in the immediately following unicast subframe, as input from multiplexing sections 103-1 and 103-2, and decreases the transmission power for the subcarrier where the pilot signal is arranged (mapping), in the leading OFDM symbol in the immediately following unicast subframe.

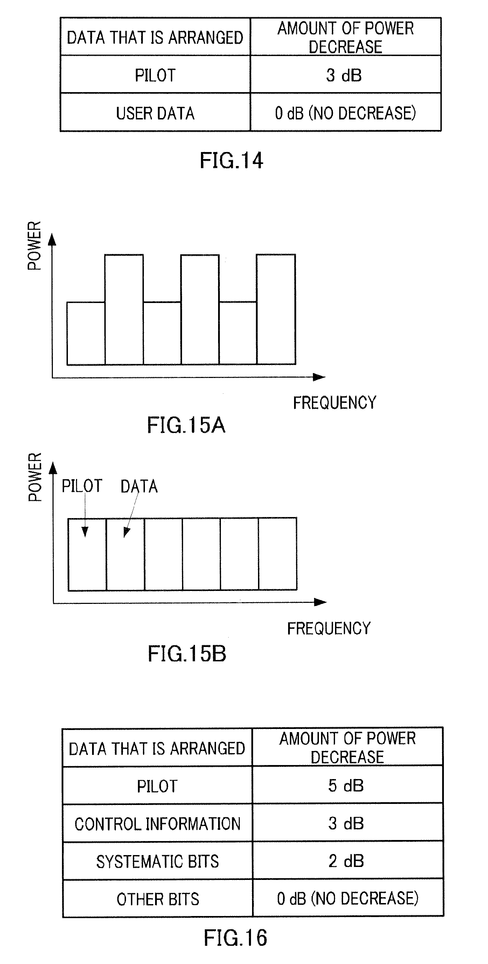

Here, the amount of transmission power decrease is determined using a data table showing the correspondence between "data that is arranged" and "the amount of power decrease" as shown in, for example, FIG. 14 .

Transmission signals from the radio transmitting apparatus according to the present embodiment shown in the frequency domain are represented as in FIGs. 15A and 15B. FIG.15A shows the last OFDM symbol in the multicast subframe. As shown in this drawing, transmission power for the subcarrier where the pilot is arranged in the next unicast subframe is set low. FIG.15B shows the leading OFDM symbol in the next unicast subframe following this multicast subframe.

In this way, according to the present embodiment, in the unicast subframe immediately following the multicast subframe, interference upon the pilot signal is reduced, so that it is possible to improve received quality for the unicast channel and system throughput.

Further, with the present embodiment, multicast subcarrier power setting section 301 may be configured to decrease transmission power for the subcarrier where control information is arranged instead of the pilot in the immediately following unicast subframe. In this case, interference upon control information can be reduced, so that it is possible to avoid receiving wrong data due to errors with control information, and improve system throughput.

Further, a configuration may be possible where transmission power for the subcarrier on which systematic bits are arranged is decreased. In this case, interference upon more important systematic bits can be reduced upon decoding in the unicast channel, so that it is possible to improve the error rate.

Further, a configuration may be possible where the amount of transmission power decrease is changed per subcarrier depending on whether data arranged in the immediately following unicast subframe is either the pilot, control information or systematic bits. In this case, "the amount of power decrease" in transmission power is determined using the data table as shown in, for example, FIG.16.

Further, although a case has been described with the present embodiment as an example where multicast data alone is transmitted in the multicast subframe, if unicast data is frequency-domain-multiplexed in the multicast subframe, that is, if unicast data is transmitted in part of subcarriers, it is possible to obtain the same effect. In this case, multicast subcarrier power setting section 301 controls the transmission power for subcarriers where multicast data is mapped.

(Embodiment 4)

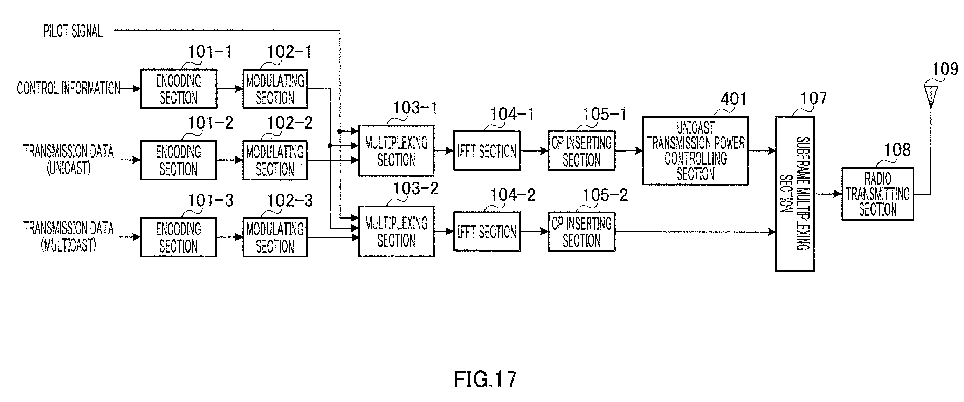

Fig.17 is a block diagram showing a main configuration of the radio transmitting apparatus according to Embodiment 4 of the present invention. Further, this radio transmitting apparatus has the same basic configuration as the radio transmitting apparatus described in Embodiment 1, and the same components will be assigned the same reference numerals and repetition of description will be omitted.

The base station mounting the radio transmitting apparatus according to the present embodiment carries out transmission by setting transmission power higher for the leading OFDM symbol in the unicast subframe immediately following the multicast subframe.

The radio transmitting apparatus according to the present embodiment differs from the radio transmitting apparatus according to Embodiment 1 in providing unicast transmission power controlling section 401 instead of multicast transmission power controlling section 106 between CP inserting section 105-1 and subframe multiplexing section 107.

Unicast transmission power controlling section 401 controls transmission power high for the leading OFDM symbol in the unicast subframe immediately following the multicast subframe. Transmission power is increased to the level of the same power value as the transmission power in the immediately preceding multicast subframe.

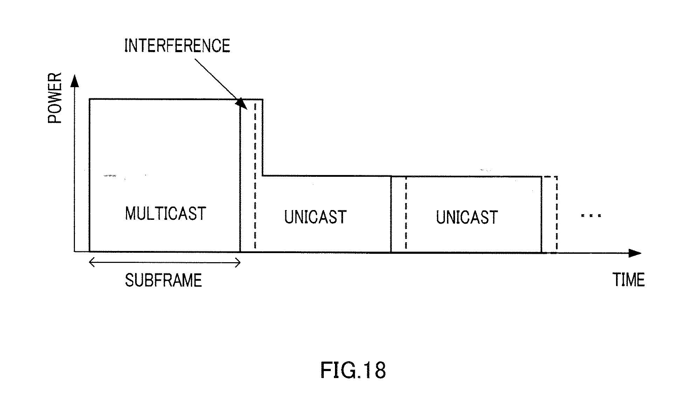

A transmission signal from the radio transmitting apparatus according to the present embodiment shown in the time domain is represented as in FIG.18. As shown in this drawing, the transmission power in the leading OFDM symbol in the unicast subframe immediately following the multicast subframe is set to the same value as the transmission power in the immediately preceding multicast subframe.

In this way, according to the present embodiment, transmission power in the leading OFDM symbol in the unicast subframe immediately following the multicast subframe is controlled high, so that, even under an environment where there is substantial interference from the multicast subframe, it is possible to keep sufficient received quality for the unicast channel.

Further, with the preset embodiment, the target range for controlling transmission power high may be the entire leading OFDM symbol or the same range as the CP length used in multicast. By making the target range the same as the CP length in this way, it is possible to set transmission power high in the minimum range which receives interference.

(Embodiment 5)

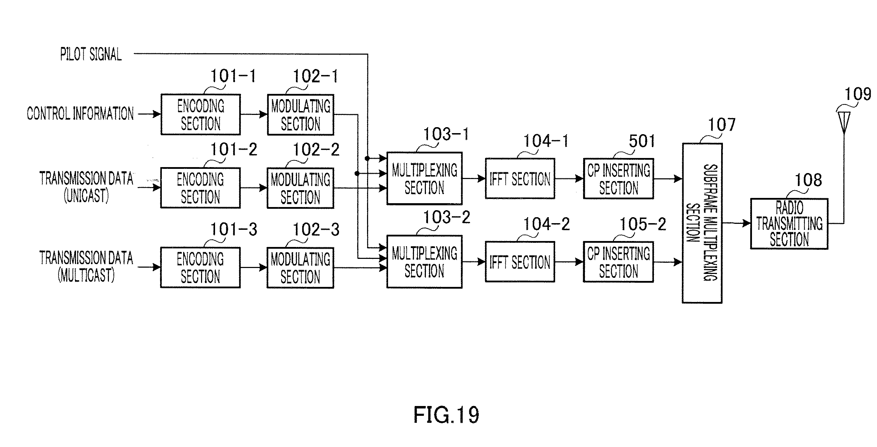

FIG.19 is a block diagram showing a main configuration showing the radio transmitting apparatus according to Embodiment 5 of the present invention. Further, this radio transmitting apparatus also has the same basic configuration as the radio transmitting apparatus described in Embodiment 1, and the same component will be assigned the same reference numerals and repetition of description will be omitted.

The base station mounting the radio transmitting apparatus according to the present embodiment sets the CP of the leading OFDM symbol longer in the unicast subframe immediately following the multicast subframe.

The radio transmitting apparatus according to the present embodiment differs from the radio transmitting apparatus according to Embodiment 1 in removing multicast transmission power controlling section 106 and providing CP inserting section 501 instead of CP inserting section 105-1 for unicast transmission data.

CP inserting section 501 for unicast applies a longer CP compared other OFDM symbols, to the leading OFDM symbol in the unicast subframe immediately following the multicast subframe. The same CP length as the CP length used in the multicast channel is used.

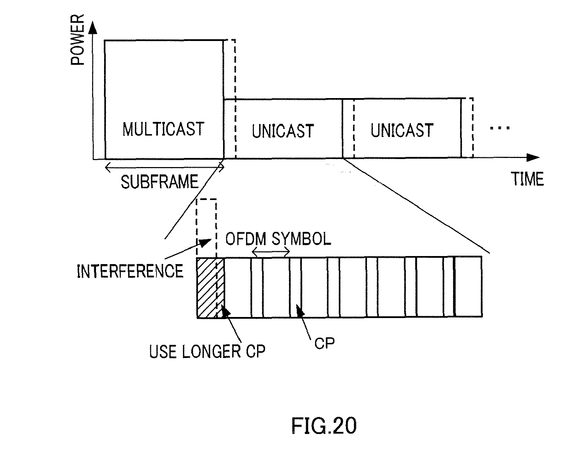

A transmission signal from the radio transmitting apparatus according to the present embodiment shown in the time domain is represented as in FIG.20. Here, of a plurality of CP's, the CP where the signal length is set longer, is shown in particular with shades.

In this way, according to the present embodiment, by setting a sufficiently long CP in the leading OFDM symbol in the unicast subframe immediately following the multicast subframe, the portion influenced by interference from the multicast subframe in the unicast signal can be reduced in the range of the CP, so that it is possible to improve received quality for the unicast channel.

Embodiments of the present invention have been described.

The radio transmitting apparatus and radio transmitting method according to the present invention are not limited to the above embodiments and can be implemented with various changes. For example, the embodiments can be realized in appropriate combinations.

The radio transmitting apparatus according to the present invention can be mounted in the communication terminal apparatus and the base station apparatus in the mobile communication system, and, consequently, it is possible to provide communication terminal apparatuses, base station apparatuses and mobile communication systems with the same advantage and effect as described above.

Further, with the present invention, "subframe" may be the units of transmission time such as time slots and frames.

Further, "CP" may be referred to as "GI (Guard Interval)."

Further, although the multicast communication scheme has been described with the embodiments as examples, the present invention may be applied to broadcast communication. Particularly with 3GPP, the broadcast communication is referred to as "MBMS (Multicast/Broadcast Multimedia Service)."

Further, besides multicast communication, the present invention can be applied to the case such as SHO where the same data is transmitted from a plurality of cells.

Also, although cases have been described with the above embodiment as examples where the present invention is configured by hardware, the present invention can also be realized by software. For example, it is possible to implement the same functions as in the radio transmitting apparatus according to the present invention by describing algorithms of the radio transmitting method according to the present invention using the programming language, and executing this program with an information processing section by storing in memory.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semi conductor technology or a derivative other technology, it is naturally also possible to carry out function block integration using this technology. Application of biotechnology is also possible.

The disclosure of Japanese Patent Application No.2006-008996, filed on January 17, 2006, including the specification, drawings and abstract is incorporated herein by reference in its entirety

Industrial Applicability

The radio transmitting apparatus and the radio transmitting method according to the present invention can be applied for use in the communication terminal apparatus and base station apparatus in the mobile communication system.

**Claims**

1. A radio transmitting method comprising:

   with respect to a multicast signal and a unicast signal adjacent to the multicast signal, carrying out control to decrease transmission power in a rear portion in the multicast signal or carrying out control to increase transmission power in a leading portion in the unicast signal; and
   transmitting the multicast signal and the unicast signal.

2. A radio transmitting apparatus comprising:

   with respect to a multicast signal and a unicast signal adjacent to the multicast signal, a controlling section that carries out control to decrease transmission power in a rear portion in the multicast signal or carries out control to increase transmission power in a leading portion in the unicast signal; and
   a transmitting section that transmits the multicast signal and the unicast signal.

3. The radio transmitting apparatus according to claim 2, further comprising an arranging section that arranges important data in a portion in the multicast signal other than the rear portion where transmission power is decreased.

4. The radio transmitting apparatus according to claim 2, wherein the controlling section decreases transmission power in an orthogonal frequency division multiplexing symbol included in the rear portion in the multicast signal.

5. The radio transmitting apparatus according to claim 4, wherein the controlling section further decreases transmission power in a rear portion in the orthogonal frequency division multiplexing symbol included in the rear portion in the multicast signal.

6. The radio transmitting apparatus according to claim 5, wherein the controlling section selects a signal corresponding to a cyclic prefix length as the rear portion in the orthogonal frequency division multiplexing symbol included in the rear portion in the multicast signal.

7. The radio transmitting apparatus according to claim 4, wherein the controlling section gradually decreases the transmission power in the orthogonal frequency division multiplexing symbol included in the rear portion in the multicast signal in a time domain.

8. The radio transmitting apparatus according to claim 2, wherein the controlling section decreases the transmission power for subcarriers included in the rear portion in the multicast signal.

9. The radio transmitting apparatus according to claim 8, wherein the controlling section decreases the transmission power for part of subcarriers in the subcarriers included in the rear portion in the multicast signal.

10. The radio transmitting apparatus according to claim 9, wherein the controlling section decreases transmission power for subcarriers that correspond to subcarriers where transmission power is set high in the unicast signal and that are included in the rear portion in the multicast signal.

11. The radio transmitting apparatus according to claim 9, wherein the controlling section decreases transmission power for subcarriers that correspond to subcarriers where important data is mapped in the unicast signal and that are included in the rear portion in the multicast signal.

12. The radio transmitting apparatus according to claim 2, wherein the controlling section increases transmission power in a leading portion in the unicast signal to a same value as transmission power in the adj acent multicast signal or a value subtracting an offset from the transmission power in the multicast signal.

13. A communication terminal apparatus comprising the radio transmitting apparatus according to claim 2.

14. A base station apparatus comprising the radio transmitting apparatus according to claim 2.

DELAY WAVES FROM NEARBY CELLS
BEYOND CP = INTERFERENCE

POWER

MULTICAST    UNICAST    UNICAST    ...

SUBFRAME    TIME

INTERFERENCE

CP    OFDM SYMBOL

FIG.1

EP 1 968 214 A1

FIG.2

EP 1 968 214 A1

FIG.3

DECREASE TRANSMISSION POWER IN LAST
PORTION IN MULTICAST SUBFRAME

FIG.4

FIG.5

FIG.6

FIG.7

FIG.8

FIG.9

BASE STATION N

BASE STATION 1

PILOT SIGNAL

CONTROL INFORMATION → ENCODING SECTION 101-1 → MODULATING SECTION 102-1

TRANSMISSION DATA (UNICAST) → ENCODING SECTION 101-2 → MODULATING SECTION 102-2

TRANSMISSION DATA (MULTICAST) → ENCODING SECTION 101-3 → MODULATING SECTION 102-3

MULTIPLEXING SECTION 103-1 → IFFT SECTION 104-1 → CP INSERTING SECTION 105-1

MULTIPLEXING SECTION 103-2 → IFFT SECTION 104-2 → CP INSERTING SECTION 105-2 → MULTICAST TRANSMISSION POWER CONTROLLING SECTION 106

SUBFRAME MULTIPLEXING SECTION 107 → RADIO TRANSMITTING SECTION 108

109

CONTROLLING STATION R1

TRANSMISSION POWER INFORMATION

. . .

EP 1 968 214 A1

17

FIG.10

POWER

SUBCARRIER OR
SUBBAND

FREQUENCY

FIG.11A

POWER

SUBCARRIER OR
SUBBAND

FREQUENCY

FIG.11B

POWER

SUBCARRIER OR
SUBBAND

FREQUENCY

FIG.12

FIG.13

PILOT SIGNAL

CONTROL INFORMATION

TRANSMISSION DATA (UNICAST)

TRANSMISSION DATA (MULTICAST)

101-1 ENCODING SECTION

101-2 ENCODING SECTION

101-3 ENCODING SECTION

102-1 MODULATING SECTION

102-2 MODULATING SECTION

102-3 MODULATING SECTION

103-1 MULTIPLEXING SECTION

103-2 MULTIPLEXING SECTION

301 MULTICAST SUBCARRIER POWER SETTING SECTION

104-1 IFFT SECTION

104-2 IFFT SECTION

105-1 CP INSERTING SECTION

105-2 CP INSERTING SECTION

107 SUBFRAME MULTIPLEXING SECTION

108 RADIO TRANSMITTING SECTION

109

| DATA THAT IS ARRANGED | AMOUNT OF POWER DECREASE |
|---|---|
| PILOT | 3 dB |
| USER DATA | 0 dB (NO DECREASE) |

FIG.14

FIG.15A

FIG.15B

| DATA THAT IS ARRANGED | AMOUNT OF POWER DECREASE |
|---|---|
| PILOT | 5 dB |
| CONTROL INFORMATION | 3 dB |
| SYSTEMATIC BITS | 2 dB |
| OTHER BITS | 0 dB (NO DECREASE) |

FIG.16

21

FIG.17

EP 1 968 214 A1

EP 1 968 214 A1

FIG.18

FIG.19

FIG.20

<div align="center">

**INTERNATIONAL SEARCH REPORT**

</div>

| | International application No. |
|---|---|
| | PCT/JP2007/050528 |

**A. CLASSIFICATION OF SUBJECT MATTER**
*H04B7/26(2006.01)i*

According to International Patent Classification (IPC) or to both national classification and IPC

**B. FIELDS SEARCHED**

Minimum documentation searched (classification system followed by classification symbols)
H04B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-332977 A  (Toshiba Corp.), 21 November, 2003 (21.11.03), Par. Nos. [0018], [0089] & US 2003/236082 A1 | 1-14 |
| A | WO 2005/036917 A1  (Qualcomm Inc.), 21 April, 2005 (21.04.05), Abstract & EP 1678981 A1          & US 2005/129058 A1 & AU 2004/306766 A1      & KR 2006/086371 A & MX 2006/003968 A1      & BR 2004/15133 A | 1-14 |
| A | JP 11-017646 A  (NEC Corp.), 22 January, 1999 (22.01.99), Par. No. [0053]; Fig. 3 & EP 886389 A2            & US 6414948 B1 & DE 69831368 E            & KR 99007171 A | 1-14 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 April, 2007 (19.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/050528

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-005781 A  (Nippon Terekomu Kabushiki Kaisha), 06 January, 2005 (06.01.05), Par. Nos. [0028] to [0030]; Fig. 7 & JP 3771914 B2 | 1-14 |

Form PCT/ISA/210 (continuation of second sheet) (April 2005)

**EP 1 968 214 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006008996 A